# EUROPÄISCHE PATENTANMELDUNG

(11) **EP 2 953 241 A1**
(43) Veröffentlichungstag der Anmeldung: **09.12.2015**
(21) Anmeldenummer: 14170915.4
(22) Anmeldetag: 03.06.2014
(51) Int. Cl.: H02K 3/40

(54) **Hochspannungsisolation, elektrisches Betriebsmittel, elektrische Maschine und Verfahren zum Herstellen der Hochspannungsisolation**

(71) Anmelder: Siemens Aktiengesellschaft, 80333 München (DE)
(72) Erfinder: Mashkin, Andrey, 50672 Köln (DE); Litinsky, Alexander, 45470 Mülheim (DE); Schmidt, Guido, 42799 Leichlingen (DE)

(57) **Zusammenfassung**

Die Erfindung betrifft eine Hochspannungsisolation mit einer Hauptisolation (1) und einem Außenglimmschutz (3), wobei der Außenglimmschutz (3) ein um die Hauptisolation (1) gewickeltes elektrisch leitfähiges Außenglimmschutzband (4) und ein um die Hauptisolation (1) gewickeltes elektrisch nicht leitfähiges Spaltglimmerband (5) aufweist, die mit gleicher Steigung gewickelt sind, und das Außenglimmschutzband (4) zwischen benachbarte Windungen des Spaltglimmerbands (5) hindurchgeführt ist sowie sich radial innerhalb und radial außerhalb des Spaltglimmerbands (5) erstreckt.

## Beschreibung

Die Erfindung betrifft eine Hochspannungsisolation, ein elektrisches Betriebsmittel mit der Hochspannungsisolation und eine elektrische Maschine mit dem elektrischen Betriebsmittel sowie ein Verfahren zum Herstellen der Hochspannungsisolation.

Ständerwicklungen von elektrischen Maschinen, wie Generatoren und Motoren, sind von einer Hochspannungsisolation umhüllt, um die Ständerwicklung gegen benachbarte Windungen der Ständerwicklung, gegen die Umgebung und gegen ein Ständerblechpaket der elektrischen Maschinen elektrisch zu isolieren. Die Hochspannungsisolation weist eine Hauptisolation und ein Glimmschutzsystem auf, wobei das Glimmschutzsystem eine Innenpotentialsteuerung, einen Außenglimmschutz und ein Endenglimmschutz aufweist. Die Innenpotentialsteuerung ist zwischen dem elektrischen Leiter der Ständerwicklung und der Hauptisolation, der Außenglimmschutz ist zwischen der Hauptisolation und dem Ständerblechpaket und der Endenglimmschutz ist außerhalb des Ständerblechpakets angeordnet.

Die Innenpotentialsteuerung und der Außenglimmschutz sorgen für einen definierten Abbau des elektrischen Potentials ausgehend von dem elektrischen Leiter bis zu dem geerdeten Ständerblechpaket. Dadurch kann die Größe der Hochspannungsisolation reduziert werden und indem die Innenpotentialsteuerung Teilentladungen an der Grenzfläche zwischen dem elektrischen Leiter und der Hauptisolation und der Außenglimmschutz Teilentladungen an der Grenzfläche zwischen der Hauptisolation und dem Ständerblechpaket unterbindet, verlängert sich die Lebensdauer der Hochspannungsisolation. Der Endenglimmschutz bewirkt einen definierten Abbau des elektrischen Potentials außerhalb des Ständerblechpakets.

Herkömmlich wird der Außenglimmschutz hergestellt, indem in einem ersten Verfahrensschritt ein inneres Außenglimmschutzband, in einem zweiten Verfahrensschritt ein Spaltglimmerband und in einem dritten Verfahrensschritt ein äußeres Außenglimmschutzband um den elektrischen Leiter gewickelt wird. Um eine elektrische Leitfähigkeit zwischen dem inneren Außenglimmschutzband und dem äußeren Außenglimmschutzband herzustellen, muss in dem zweiten Verfahrensschritt aufwändig in Handarbeit ein weiteres Außenglimmschutzband eingefädelt werden, so dass das weitere Außenglimmschutzband abwechselnd über und unter dem Spaltglimmerband verläuft.

Aufgabe der Erfindung ist es, eine Hochspannungsisolation, ein elektrisches Betriebsmittel mit der Hochspannungsisolation, eine elektrische Maschine mit dem elektrischen Betriebsmittel und ein Verfahren zum Herstellen der Hochspannungsisolation zu schaffen, wobei die Hochspannungsisolation einfach herstellbar ist.

Die erfindungsgemäße Hochspannungsisolation weist eine Hauptisolation und einen Außenglimmschutz auf, wobei der Außenglimmschutz ein um die Hauptisolation gewickeltes elektrisch leitfähiges Außenglimmschutzband und ein um die Hauptisolation gewickeltes elektrisch nicht leitfähiges Spaltglimmerband aufweist, die mit gleicher Steigung gewickelt sind, und das Außenglimmschutzband ist zwischen benachbarte Windungen des Spaltglimmerbands hindurchgeführt ist sowie erstreckt sich radial innerhalb und radial außerhalb des Spaltglimmerbands. Das Außenglimmschutzband und das Spaltglimmerband kann in einem einzigen Verfahrensschritt gewickelt werden, so dass auch vorteilhaft die Hochspannungsisolation in einem einzigen Verfahrensschritt und damit einfach hergestellt werden kann. Zudem ist es nicht erforderlich, ein Außenglimmschutzband von Hand durch das Spaltglimmerband durchzufädeln, sondern der gesamte Außenglimmschutz kann von einem Wickelroboter aufgebracht werden. Indem das Außenglimmschutzband durch die benachbarten Windungen des Spaltglimmerbandes hindurchgeführt ist, ist auch vorteilhaft eine elektrische Anbindung der radial inneren Oberfläche des Außenglimmschutzes und eine elektrische Leitung von radial innerhalb des Spaltglimmerbandes nach radial außerhalb des Spaltglimmerbandes ermöglicht. Zudem ist es nicht erforderlich, ein inneres Außenglimmschutzband und ein äußeres Außenglimmschutzband vorzusehen, wodurch die Hochspannungsisolation einen einfachen Aufbau hat.

Es ist bevorzugt, dass das Außenglimmschutzband elektrisch leitend an das Blechpaket angebunden ist. Das Blechpaket ist dabei an das Erdpotential angeschlossen, so dass auch das Außenglimmschutzband elektrisch leitend an das Erdpotential angebunden ist. Dadurch ist ein effektiver Abbau des elektrischen Potentials um die Hauptisolation herum möglich, wodurch die Hochspannungsisolation klein ausgebildet sein kann. Zudem werden dadurch elektrische Teilentladungen unterbunden, wodurch die Hochspannungsisolation eine lange Lebensdauer hat.

Die Steigung und die Breite des Außenglimmschutzbands sind bevorzugt derart gewählt, dass radial innerhalb des Spaltglimmerbandes das Außenglimmschutzband mit sich selbst überlappend oder anstoßend angeordnet ist. Dadurch ist vorteilhaft sichergestellt, dass sich radial innerhalb des Spaltglimmerbandes keine Hohlräume zwischen benachbarten Windungen des Außenglimmschutzbandes bilden. Die Hohlräume können im Betrieb der Hochspannungsisolation zu der Bildung von Teilentladungen führen, welche die Lebensdauer der Hochspannungsisolation verkürzt. Es ist bevorzugt, dass die Steigung und die Breite des Spaltglimmerbandes derart gewählt sind, dass das Spaltglimmerband mit sich selbst anstoßend oder überlappend angeordnet ist. Das Außenglimmschutzband ist bevorzugt breiter als das Spaltglimmerband. Damit ist vorteilhaft sichergestellt, dass das Außenglimmschutzband die Hauptisolation zur Vermeidung von Teilentladungen vollständig bedeckt und gleichzeitig eine elektrische Leitung von radial innerhalb des Spaltglimmerbandes nach radial außerhalb des Spaltglimmerbandes ermöglicht wird.

Es ist bevorzugt, dass der Außenglimmschutz ein elektrisch leitfähiges äußeres Außenglimmschutzband aufweist, das radial außerhalb des Außenglimmschutzbandes und des Spaltglimmerbandes angeordnet ist und elektrisch leitend mit dem Außenglimmschutzband verbunden ist. Bevorzugtermaßen weist der Außenglimmschutz ein elektrisch leitfähiges inneres Außenglimmschutzband auf, das radial innerhalb des Außenglimmschutzbandes und des Spaltglimmerbandes angeordnet ist und das Außenglimmschutzband via das innere Außenglimmschutzband elektrisch leitend an die radial außen liegende Oberfläche der Hauptisolation angebunden ist. Durch die zusätzlichen Außenglimmschutzbänder wird ein zusätzlicher Schutz vor der Bildung von Teilentladungen erreicht, wodurch die Hochspannungsisolation eine lange Lebensdauer hat.

Das erfindungsgemäße elektrische Betriebsmittel weist die Hochspannungsisolation und einen elektrischen Leiter auf, wobei die Hochspannungsisolation den elektrischen Leiter umhüllt.

Die erfindungsgemäße elektrische Maschine weist mindestens ein elektrisches Betriebsmittel und ein Ständerblechpaket auf, wobei das elektrische Betriebsmittel in eine Nut des Ständerblechpakets eingebracht ist und der Außenglimmschutz elektrisch leitend an das Ständerblechpaket angebunden ist. Der Außenglimmschutz bewirkt eine mechanische Entkopplung des Außenglimmschutzes von dem Ständerblechpaket trotz der elektrisch leitenden Anbindung, wodurch im Betrieb der elektrischen Maschine keine thermomechanischen Spannungen in der Hochspannungsisolation auftreten. Durch die Vermeidung der thermomechanischen Spannungen hat die elektrische Maschine eine lange Lebensdauer.

Das erfindungsgemäße Verfahren zum Herstellen der Hochspannungsisolation weist den Schritt auf: - gleichzeitiges Wickeln eines Außenglimmschutzbandes und eines Spaltglimmerbandes mit gleicher Steigung um eine einen elektrischen Leiter umhüllende Hauptisolation, wobei das Außenglimmschutzband derart in Längsrichtung des elektrischen Leiters versetzt gegenüber das Spaltglimmerband angeordnet ist, dass sich das Außenglimmschutzband im gewickelten Zustand zwischen benachbarte Windungen des Spaltglimmerbands hindurchgeführt ist sowie radial innerhalb und radial außerhalb des Spaltglimmerbands erstreckt. Indem das Wickeln des Außenglimmschutzschutzes nur in einem einzigen Verfahrensschritt erfolgt und kein Einfädeln von Hand erforderlich ist, ist das Verfahren vorteilhaft einfach durchführbar.

Im Folgenden wird anhand der beigefügten schematischen Zeichnungen die Erfindung näher erläutert. Es zeigen
- Figur 1: eine erste Ausführungsform der Erfindung,
- Figur 2: eine zweite Ausführungsform der Erfindung,
- Figur 3: eine dritte Ausführungsform der Erfindung,
- Figur 4: eine vierte Ausführungsform der Erfindung,
- Figur 5: den Wicklungsvorgang für die vierte Ausführungsform der Erfindung,
- Figur 6: eine fünfte Ausführungsform der Erfindung,
- Figur 7: eine sechste Ausführungsform der Erfindung und
- Figur 8: eine siebte Ausführungsform der Erfindung.

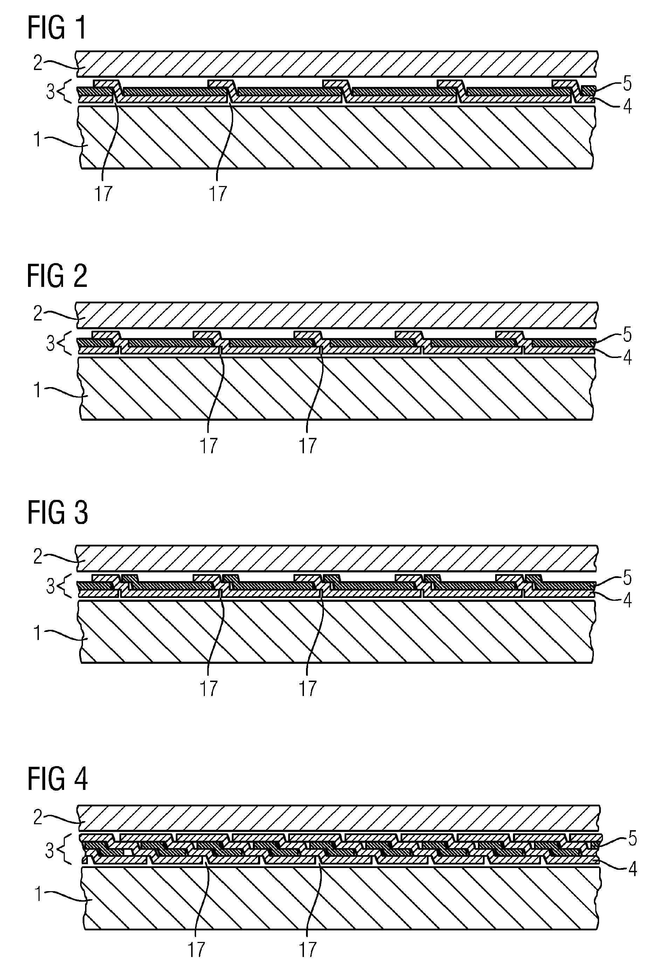

Wie es aus Figuren 1 bis 8 ersichtlich ist, weist eine Hochspannungsisolation 16 eine Hauptisolation 1, eine Innenpotentialsteuerung 15 und einen Außenglimmschutz 3 auf und umhüllt einen elektrischen Leiter 14. Die Innenpotentialsteuerung 14 ist elektrisch leitfähig und zwischen dem elektrischen Leiter und der Hauptisolation 14 angeordnet. Die Innenpotentialsteuerung 15 ist elektrisch leitend mit dem elektrischen Leiter 14 verbunden und mechanisch an die Hauptisolation 1 angebunden. Der Außenglimmschutz 3 ist elektrisch leitfähig und radial außerhalb der Hauptisolation 1 angeordnet und umschließt diese.

Die Anordnung aus Hauptisolation 1 und elektrischem Leiter 14 ist ein elektrisches Betriebsmittel. Ist das elektrische Betriebsmittel Teil einer elektrischen Maschine, wobei die elektrische Maschine beispielsweise ein Generator oder ein Motor sein kann, so ist der Außenglimmschutz 3 elektrisch leitend an ein Ständerblechpaket 2 (siehe Figuren 1 bis 4 und 6 bis 8) der elektrischen Maschine angebunden.

Der Außenglimmschutz 3 weist ein elektrisch leitfähiges Außenglimmschutzband 4 und ein elektrisch nicht leitfähiges Spaltglimmerband 5 auf, die jeweils um die Hauptisolation 1 gewickelt sind. Das Außenglimmschutzband 4 und das Spaltglimmerband 5 sind dabei mit einer gleichen Steigung gewickelt. Das Außenglimmschutzband 4 und das Spaltglimmerband 5 sind dabei derart gewickelt, dass das Außenglimmschutzband 4 zwischen benachbarte Windungen des Spaltglimmerbandes 5 hindurchgeführt ist und sich sowohl radial innerhalb des Spaltglimmerbandes 5 als auch radial außerhalb des Spaltglimmerbandes 5 erstreckt, so dass via das Spaltglimmerband 5 eine elektrische Leitung von der radialen Außenseite der Hauptisolation 1 bis zu dem Ständerblechpaket 2 ermöglicht ist.

Figuren 1 bis 4 zeigen den Fall, dass lediglich ein einzelnes Außenglimmschutzband 4 um die Hauptisolation 1 gewickelt ist. In diesem Fall ist das Außenglimmschutzband 4 derart angeordnet, dass das Außenglimmschutzband 4 unmittelbar auf der Hauptisolation 4 liegt und diese im Wesentlichen hohlraumfrei bedeckt. Lediglich zwischen zwei benachbarten Windungen des Außenglimmschutzbandes 4 kann ein schmaler Spalt 17 ausgebildet sein.

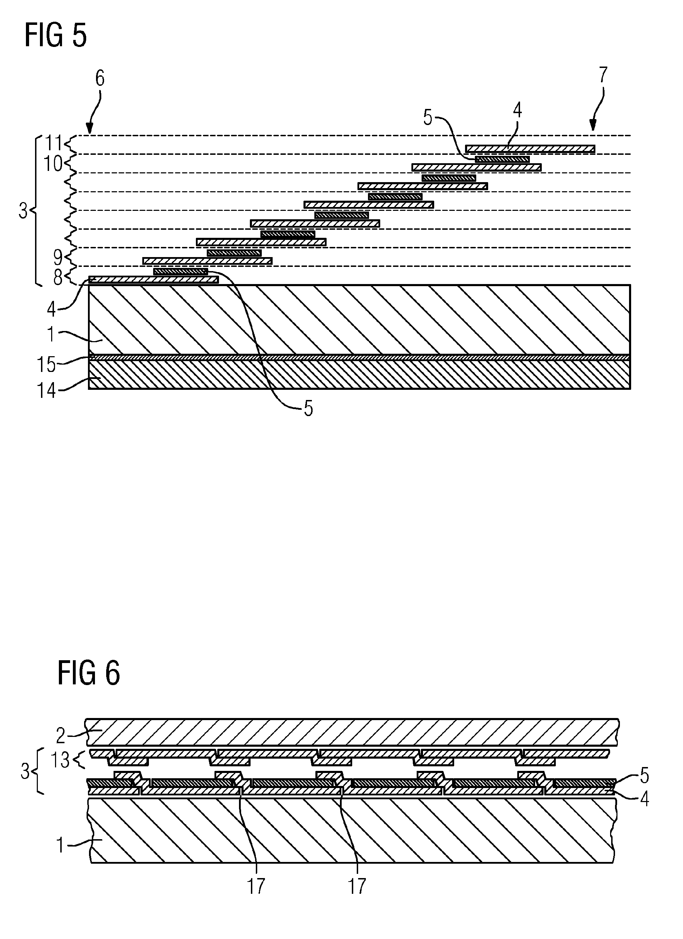

Figur 5 stellt den Wicklungsvorgang für die vierte Ausführungsform gemäß Figur 4 dar. Figur 5 zeigt die Lagen des Außenglimmschutzbandes 4 und des Spaltglimmerbandes 5 nach jeweils einer Umdrehung. Wie es aus Figur 5 ersichtlich ist, entspricht die Breite des Spaltglimmerbandes 5 genau der Steigung der Wicklung, d.h. nach einer Umdrehung hat sich die Lage des Spaltglimmerbandes 5 und des Außenglimmschutzbandes 4 um die Breite des Spaltglimmerbandes 5 in Richtung von dem Anfang 6 des Außenglimmschutzes 3 zu dem Ende 7 des Außenglimmschutzes 3 verschoben. Somit ist das Außenglimmschutzband 3 auf Stoß gewickelt. Es ist jedoch auch denkbar, dass Spaltglimmerband 5 breiter als die Steigung der Wicklung auszuführen, so dass das Spaltglimmerband 5 in der Wicklung mit sich selbst überlappend angeordnet ist. Die erste Windung 8 des Außenglimmschutzes 3, welche den Anfang 6 begrenzt, und jede darauf folgende Windung 9 bis 10 mit Ausnahme der letzten Windung 11 zeichnen sich dadurch aus, dass der Außenglimmschutz 4 radial innerhalb des Spaltglimmerbandes 5 angeordnet ist. Dadurch wird erreicht, dass ein möglichst großer Bereich des Außenglimmschutzes 4 auf der Hauptisolation 1 zu liegen kommt. In der letzten Windung 11, am Ende 7 des Außenglimmschutzes 3, wird lediglich der Außenglimmschutz 4 gewickelt, so dass ein elektrischer Anschluss an einen Endenglimmschutz ermöglicht wird.

Das Außenglimmschutzband 4 ist breiter als das Spaltglimmerband 5 ausgeführt, so dass das Außenglimmschutzband 5 die Oberfläche der Hauptisolation 1 im Wesentlichen vollständig bedeckt und zwischen benachbarten Windungen des Spaltglimmerbandes 5 hindurchgeführt werden kann sowie sich auf der radialen Außenseite des Spaltglimmerbandes 5 erstrecken kann. Das Außenglimmschutzband 4 der vierten Ausführungsform aus Figuren 4 und 5 ist dabei derart breit ausgeführt, dass es mit benachbarten Windungen sowohl radial innerhalb als auch radial außerhalb des Spaltglimmerbandes 5 überlappt. Der Außenglimmschutz 3 gemäß der vierten Ausführungsform kann in einzigen Verfahrensschritt auf die Hauptisolation 1 gewickelt werden.

Das Außenglimmschutzband 4 der dritten Ausführungsform gemäß Figur 3 ist schmaler ausgeführt als das Außenglimmschutzband 4 der vierten Ausführungsform, so dass das Außenglimmschutzband 4 nur einmal mit benachbarten Windungen und zwar radial innerhalb des Spaltglimmerbandes 5 überlappt. Das Außenglimmschutzband 4 der zweiten Ausführungsform gemäß Figur 2 ist gleich breit wie in der dritten Ausführungsform ausgeführt, jedoch ist das Spaltglimmerband 5 der zweiten Ausführungsform schmaler als die Steigung der Wicklung, so dass das Spaltglimmerband 5 nicht auf Stoß gewickelt ist und zwischen benachbarten Windungen des Spaltglimmerbandes 5 ein großer Abstand erzeugt wird. Dadurch lässt sich das Außenglimmschutzband 4 besonders einfach zwischen benachbarten Windungen des Spaltglimmerbandes hindurchführen. Die erste Ausführungsform gemäß Figur 1 offenbart eine Breite des Spaltglimmerbandes, die zwischen der Breite der zweiten und der Breite der dritten Ausführungsform liegt.

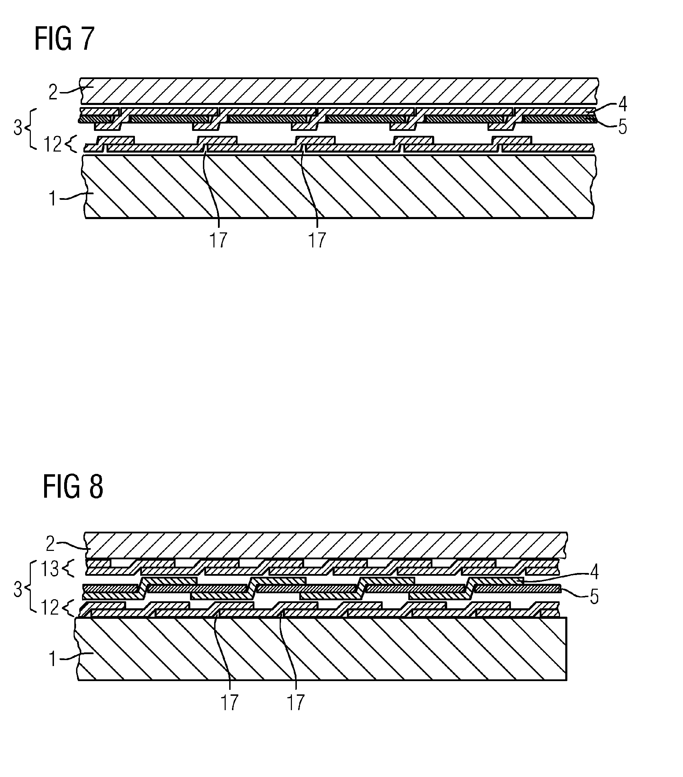

In der fünften Ausführungsform gemäß Figur 6 weist der Außenglimmschutz 3 zusätzlich ein äußeres Außenglimmschutzband 13 auf, welches radial außerhalb des Außenglimmschutzbandes 4 und des Spaltglimmerbandes 5 angeordnet ist. In der sechsten Ausführungsform gemäß Figur 7 weist der Außenglimmschutz 3 zusätzlich ein inneres Außenglimmschutzband 12 auf, welches radial innerhalb des Außenglimmschutzbandes 4 und des Spaltglimmerbandes 5 angeordnet ist. In der siebten Ausführungsform gemäß Figur 8 weist der Außenglimmschutz 3 sowohl ein inneres Außenglimmschutzband 12 als auch ein äußeres Außenglimmschutzband 13 auf. Das innere Außenglimmschutzband 12 und das äußere Außenglimmschutzband 13 sind in Figuren 6 bis 8 jeweils auf Stoß gewickelt, d.h. dass benachbarte Windungen der Außenglimmschutzbänder 12, 13 jeweils überlappen. Indem das innere Außenglimmschutzband 12 überlappend angeordnet ist, ist sichergestellt, dass die vollständige Oberfläche der Hauptisolation bedeckt ist. Es sind jedoch auch Ausführungsformen denkbar, in denen das innere Außenglimmschutzband und/oder das äußere Außenglimmschutzband mit sich selbst anstoßend angeordnet sind. Das innere Außenglimmschutzband 12 und das äußere Außenglimmschutzband 13 sind dabei mit dem Außenglimmschutzband 4 derart in Berührkontakt, dass eine elektrische Leitung zwischen den Außenglimmschutzbändern 4, 12 und 13 ermöglicht ist. In dem Fall, dass das innere Außenglimmschutzband 12 vorgesehen ist, ist es nicht erforderlich, dass das Außenglimmschutzband 4 breiter als das Spaltglimmerband ausgeführt ist, sondern das Außenglimmschutzband 4 muss lediglich derart breit ausgeführt sein, dass es sich radial innerhalb und radial außerhalb des Spaltglimmerbandes 5 erstreckt, so dass es eine elektrische Leitung von dem inneren Außenglimmschutzband 12 nach radial außerhalb des Spaltglimmerbandes 5 ermöglicht. Das äußere Außenglimmschutzband 12 und das innere Außenglimmschutzband 13 werden in separaten Wicklungsschritten auf die Hauptisolation aufgebracht.

Anhand von zwei Beispielen wird im Folgenden die Erfindung näher erläutert.

Eine beispielhafte Hochspannungsisolation weist eine Hauptisolation 1 und einem Außenglimmschutz 3 auf, wobei der Außenglimmschutz 3 ein um die Hauptisolation 1 gewickeltes elektrisch leitfähiges Außenglimmschutzband 4 und ein um die Hauptisolation 1 gewickeltes elektrisch nicht leitfähiges Spaltglimmerband 5 aufweist, die mit gleicher Steigung gewickelt sind, wobei das Außenglimmschutzband 4 zwischen benachbarte Windungen des Spaltglimmerbands 5 hindurchgeführt ist sowie sich radial innerhalb und radial außerhalb des Spaltglimmerbands 5 erstreckt, wobei das Außenglimmschutzband 4 breiter als das Spaltglimmerband 5 ist und elektrisch leitend an die radial außen liegende Oberfläche der Hauptisolation 1 angebunden ist, so dass die Oberfläche im Wesentlichen vollständig von dem Außenglimmschutzband 4 bedeckt ist, wobei die Steigung und die Breite des Spaltglimmerbandes 5 derart gewählt sind, dass Spaltglimmerband 5 mit sich selbst anstoßend angeordnet ist.

Ein beispielhaftes Verfahren zum Herstellen einer Hochspannungsisolation weist den Schritt auf: - gleichzeitiges Wickeln eines Außenglimmschutzbandes 4 und eines Spaltglimmerbandes 5, das schmaler als das Außenglimmschutzband 4 ist, mit gleicher Steigung, die der Breite des Spaltglimmerbandes 5 entspricht, um eine einen elektrischen Leiter 14 umhüllende Hauptisolation 1, wobei das Außenglimmschutzband 4 derart in Längsrichtung des elektrischen Leiters 14 versetzt gegenüber das Spaltglimmerband 5 angeordnet ist, dass das Außenglimmschutzband 4 im gewickelten Zustand zwischen benachbarte Windungen des Spaltglimmerbands 5 hindurchgeführt ist sowie sich radial innerhalb und radial außerhalb des Spaltglimmerbands 5 erstreckt.

Obwohl die Erfindung im Detail durch die bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Hochspannungsisolation mit einer Hauptisolation (1) und einem Außenglimmschutz (3),
wobei der Außenglimmschutz (3) ein um die Hauptisolation (1) gewickeltes elektrisch leitfähiges Außenglimmschutzband (4) und ein um die Hauptisolation (1) gewickeltes elektrisch nicht leitfähiges Spaltglimmerband (5) aufweist, die mit gleicher Steigung gewickelt sind, und das Außenglimmschutzband (4) zwischen benachbarte Windungen des Spaltglimmerbands (5) hindurchgeführt ist sowie sich radial innerhalb und radial außerhalb des Spaltglimmerbands (5) erstreckt.

2. Hochspannungsisolation gemäß Anspruch 1,
wobei das Außenglimmschutzband (4) elektrisch leitend an Blechpaket (2) angeschlossen ist.

3. Hochspannungsisolation gemäß Anspruch 1 oder 2,
wobei die Steigung und die Breite des Außenglimmschutzbands (4) derart gewählt sind, dass radial innerhalb des Spaltglimmerbandes (5) das Außenglimmschutzband (4) mit sich selbst überlappend oder anstoßend angeordnet ist.

4. Hochspannungsisolation gemäß einem der Ansprüche 1 bis 3,
wobei die Steigung und die Breite des Spaltglimmerbandes (5) derart gewählt sind, dass das Spaltglimmerband (5) mit sich selbst anstoßend oder überlappend angeordnet ist.

5. Hochspannungsisolation gemäß einem der Ansprüche 1 bis 4,
wobei das Außenglimmschutzband (4) breiter als das Spaltglimmerband (5) ist.

6. Hochspannungsisolation gemäß einem der Ansprüche 1 bis 5,
wobei der Außenglimmschutz (3) ein elektrisch leitfähiges äußeres Außenglimmschutzband (12) aufweist, das radial außerhalb des Außenglimmschutzbandes (4) und des Spaltglimmerbandes (5) angeordnet ist und elektrisch leitend mit dem Außenglimmschutzband (4) verbunden ist.

7. Hochspannungsisolation gemäß einem der Ansprüche 1 bis 6,
wobei der Außenglimmschutz (3) ein elektrisch leitfähiges inneres Außenglimmschutzband (11) aufweist, das radial innerhalb des Außenglimmschutzbandes (4) und des Spaltglimmerbandes (5) angeordnet ist und das Außenglimmschutzband (4) via das innere Außenglimmschutzband (11) elektrisch leitend an die radial außen liegende Oberfläche der Hauptisolation (1) angebunden ist.

8. Elektrisches Betriebsmittel aufweisend eine Hochspannungsisolation (16) gemäß einem der Ansprüche 1 bis 7
und einen elektrischen Leiter,
wobei die Hochspannungsisolation (16) den elektrischen Leiter umhüllt.

9. Elektrische Maschine mit mindestens einem elektrischen Betriebsmittel gemäß Anspruch 8
und einem Ständerblechpaket (2),
wobei das elektrische Betriebsmittel in eine Nut des Ständerblechpakets (2) eingebracht ist und der Außenglimmschutz (3) elektrisch leitend an das Ständerblechpaket (2) angebunden ist.

10. Verfahren zum Herstellen einer Hochspannungsisolation (16) gemäß einem der Ansprüche 1 bis 7, mit dem Schritt:
- gleichzeitiges Wickeln eines Außenglimmschutzbandes (4) und eines Spaltglimmerbandes (5) mit gleicher Steigung um eine einen elektrischen Leiter (14) umhüllende Hauptisolation (1),
wobei das Außenglimmschutzband (4) derart in Längsrichtung des elektrischen Leiters (14) versetzt gegenüber das Spaltglimmerband (5) angeordnet ist, dass das Außenglimmschutzband (4) im gewickelten Zustand zwischen benachbarte Windungen des Spaltglimmerbands (5) hindurchgeführt ist sowie sich radial innerhalb und radial außerhalb des Spaltglimmerbands (5) erstreckt.
